# EUROPÄISCHE PATENTSCHRIFT

(11) **EP 2 852 274 B1**
(45) Veröffentlichungstag und Bekanntmachung des Hinweises auf die Patenterteilung: **06.07.2016**
(21) Anmeldenummer: 13730469.7
(22) Anmeldetag: 16.05.2013
(51) Int. Cl.: A01F 12/10, A01D 61/00, B65G 19/24

(54) **SCHRÄGFÖRDERER FÜR MÄHDRESCHER**
INCLINED FEEDER FOR COMBINE HARVESTERS
CONVOYEUR D'ALIMENTATION OBLIQUE POUR MOISSONNEUSES-BATTEUSES

(30) Priorität: 21.05.2012 DE 102012010280
(43) Veröffentlichungstag der Anmeldung: 01.04.2015
(73) Patentinhaber: Arnold Jäger Holding GmbH, 30625 Hannover (DE)
(72) Erfinder: MULDER, Jan-Harm, 7751 DN Dalen (NL); OORD, Johan, 9717 KV Groningen (NL); JÄGER, Sebastian, 30657 Hannover (DE)
(74) Vertreter: Bremer, Ulrich
(86) Internationale Anmeldenummer: PCT/DE2013/100180
(87) Internationale Veröffentlichungsnummer: WO 2013/174370

(56) Entgegenhaltungen:
- DE-A1- 3 733 712
- DE-A1-102010 035 043
- DE-B4-102009 036 104
- DE-C- 861 071
- DE-U1- 29 703 270

## Beschreibung

Die vorliegende Erfindung betrifft einen Schrägförderer für Mähdrescher gemäß dem Oberbegriff des Anspruchs 1.

Mähdrescher sind mit einem Vorsatzgerät ausgerüstet, welches eine Haspel zum Erfassen des Ernteguts und eine hinter der Haspel angeordnete Querförderschnecke ausweist, die das Erntegut verdichtet und zur Mitte hin zu einem Schrägförderer fördert. Dieser ist in einem Kanal angeordnet und fördert das Erntegut in eine Dreschvorrichtung des Mähdreschers.

Gattungsgemäße Schrägförderer für Mähdrescher sind aus dem Stand der Technik hinreichend bekannt, so z. B. aus der DE 1199039, der US 3555790, der DE 4132246 A1, der DE 4311054 C2, der DE 102009036104 B4, der EP 1733607 B1 und der DE 102005027841 A1. Diese Schrägförderer weisen mindestens zwei parallel zueinander verlaufende, endlose Zugmittel auf, die durch quer zur Förderrichtung angeordnete Mitnehmerleisten miteinander verbunden sind. Die Mitnehmerleisten führen das Erntegut in einem unterschlächtigen Förderkanal einer Drescheinheit des Mähdreschers zu. Sie sind durch Verschraubung mit den Zugmitteln verbunden.

In der DE 861 071 ist ein Stabförderer beschrieben, dessen Zugorgane als gelenklose, schmiegsame Bänder ausgebildet sind, z. B. als Gummibänder mit Gewebeeinlagen. An diesen Bändern sind Aufnahmehülsen angeordnet, die in die Enden von Rundstäben einsteckbar sind.

Aus der DE 10 2004 023 705 B3 ist ein Stabförderer zum Verdichten von Erntegut bekannt. Dieser Förderer weist Querstäbe mit rundem Querschnitt auf, die an ihren endseitigen Verbindungsbereichen mit dem Zugmittel eine Faltung besitzen.

Nach dem Stand der Technik werden als Mitnehmerleisten nicht wärmebehandelte Standardstahlprofile wie U-, L- und T-Profile eingesetzt. Diese Mitnehmerleisten haben eine geringe Profilhöhe und eine begrenzte Förderwirkung aufgrund ihres geringen Formwiderstandes gegenüber dem Erntegut. Zudem sind die Profile sehr glatt und haben daher einen sehr geringen Reibschluss mit dem Erntegut. Aufgrund der Reibung des Ernteguts am Boden des Förderkanals und der mäßigen Mitnahmewirkung der Mitnehmerleisten kommt es im Betrieb zu einer beträchtlichen Geschwindigkeitsdifferenz zwischen den Mitnehmerleisten und dem Erntegutstrom (Schlupf). Daraus resultieren ein hoher Energieverbrauch, ein hoher Verschleiß, eine hohe Förderkettenbelastung sowie ein vorzeitiger Drescheffekt.

Die Mitnehmerleisten sind im Betrieb sehr hohen Belastungen ausgesetzt. So treten aufgrund der an den Umlenkstellen der Zugmittel wirkenden Fliehkräfte hohe Zugspannungen an den Mitnehmerleisten auf. Zudem kommt es beim anschließenden Kontakt mit dem Erntegutstrom zu Druckspannungen in den Mitnehmerleisten. Hinzu kommen Spannungen durch ein Tordieren der Mitnehmerleisten bei ungleichmäßigem Erntegutstrom über die Förderkanallänge und -breite. Weiterhin kommt es zu Verbiegungen durch die Mitnahme des Ernteguts in der Erntegutebene. Darüber hinaus treten große Belastungen der Mitnehmerleisten auf, wenn große oder schwere Fremdkörper in den Erntegutstrom gelangen.

Um diesen Belastungen standhalten zu können, sind große Flächenträgheitsmomente und Widerstandsmomente erforderlich. Hierdurch werden die Mitnehmerleisten sehr schwer. Das hohe Gewicht begrenzt die Fördergeschwindigkeit, weil die Fliehkräfte in den Umlenkungen sehr groß sind. Zudem neigt das System zu Schwingungen, wodurch die Mitnehmerleisten auf die Wandungen des Förderkanals treffen und starken Lärm erzeugen.

Aufgabe der vorliegenden Erfindung ist es, einen gattungsgemäßen Schrägförderer für Mähdrescher zur Verfügung zu stellen, bei dem die Belastung der Zugmittel durch ein geringes Gewicht der Mitnehmerleisten sowie eine geringere Fördergeschwindigkeit reduziert ist.

Diese Aufgabe wird erfindungsgemäß mit einem Schrägförderer gelöst, der die Merkmale des Anspruchs 1 aufweist.

In gänzlicher Abkehr vom Stand der Technik, der, wie eingangs beschrieben, den Einsatz schwerer Standardstahlprofile als Mitnehmerleisten vorsieht, bestehen die Mitnehmerleisten nach der vorliegenden Erfindung aus mindestens zwei übereinander angeordneten Stäben mit rundem Querschnitt, die als Einzelstäbe an den Zugmitteln befestigt sind. Die im Betrieb des Schrägförderers auf die Stäbe wirkenden Biege- und Torsionsbelastungen rufen aufgrund des runden Querschnitts der Stäbe nur geringe Spannungsspitzen hervor. Die Stäbe können daher mit einem geringen Durchmesser ausgeführt werden, wodurch sie sehr flexibel sind. Die Streckgrenze des Stabmaterials wird dadurch auch in ungünstigen Belastungsfällen nicht erreicht (Glasfaserprinzip). Obwohl die Stäbe einen geringen Durchmesser aufweisen, ragen sie aufgrund der Übereinanderanordnung von mindestens zwei Stäben weiter in den Fördergutstrom hinein als die nach dem Stand der Technik eingesetzten, schweren Standardstahlprofile. Schon allein dadurch wird die Mitnahmewirkung der Mitnehmerleisten auf das Erntegut erhöht.

In vorteilhafter Ausgestaltung kann die Mitnahmewirkung noch dadurch vergrößert werden, dass die Stäbe mit einer friktionserhöhenden Ummantelung versehen sind.

Weitere vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigt:
- Fig. 1: eine schematische Seitenansicht eines Mähdreschers mit Mäheinheit und Schrägförderer,
- Fig. 2: einen perspektivischen Blick auf eine Verbindungsstelle zwischen einer Mitnehmerleiste und einem Zugmittel des Schrägförderers,
- Fig. 3: einen perspektivischen Blick auf eine Mitnehmerleiste des Schrägförderers gemäß einer zweiten Ausführungsform der Erfindung, und
- Fig. 4: einen Schnitt durch eine Mitnehmerleiste gemäß einer dritten Ausführungsform der Erfindung.

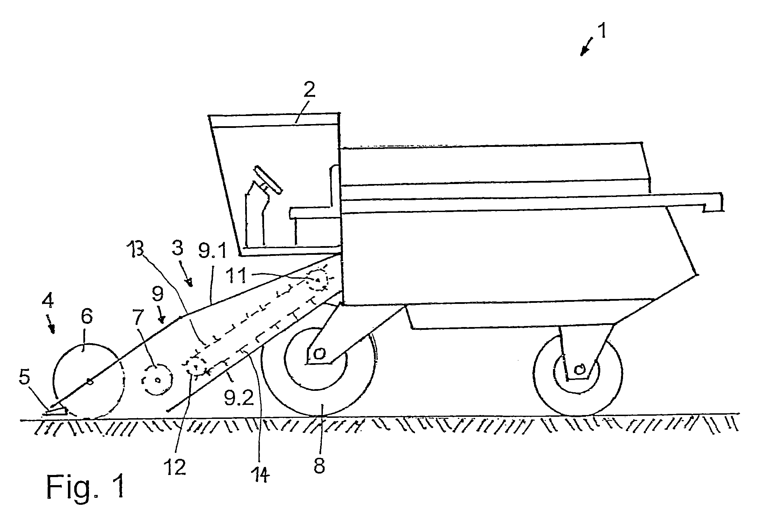

Fig. 1 zeigt einen selbstfahrenden Mähdrescher 1. Unterhalb der Fahrerkabine 2 erstreckt sich ein Schrägförderer 3 nach vorn unten. Er trägt an seinem vorderen Ende eine Mäheinheit 4, bestehend aus einem Mähbalken 5, einer Haspel 6 und einer Querförderschnecke 7. Die Mäheinheit 4 ist wesentlich breiter als der Mähdrescher 1 und erstreckt sich üblicherweise quer über dessen vordere Antriebsräder 8 hinaus, während der Schrägförderer 3 schmaler ist. Das Erntegut wird von dem Mähbalken 5 abgeschnitten, von der Haspel 6 erfasst und der Querförderschnecke 7 zugeführt. Die Querförderschnecke 7 fördert und verdichtet das Erntegut zur Mitte hin und führt es dem Schrägförderer 3 zu. Dieser ist in einem Förderkanal 9 angeordnet, der eine Deckwand 9.1, eine Bodenwand 9.2 und zwei Seitenwände besitzt. Der Schrägförderer 3 fördert das Erntegut auf der Bodenwand 9.2 des Förderkanals 9 einer nicht dargestellten Drescheinheit des Mähdreschers 1 zu.

Der Schrägförderer 3 umfasst mindestens zwei parallel zueinander verlaufende, endlose Zugmittel 13, die durch quer zur Förderrichtung angeordnete Mitnehmerleisten 14 miteinander verbunden sind. Die Zugmittel 13 laufen um eine obere Zugmittelführung 11 und eine untere Zugmittelführung 12 im Förderkanal 9 um, wobei die obere Zugmittelführung 11 angetrieben ist und die untere Zugmittelführung 12 mitläuft.

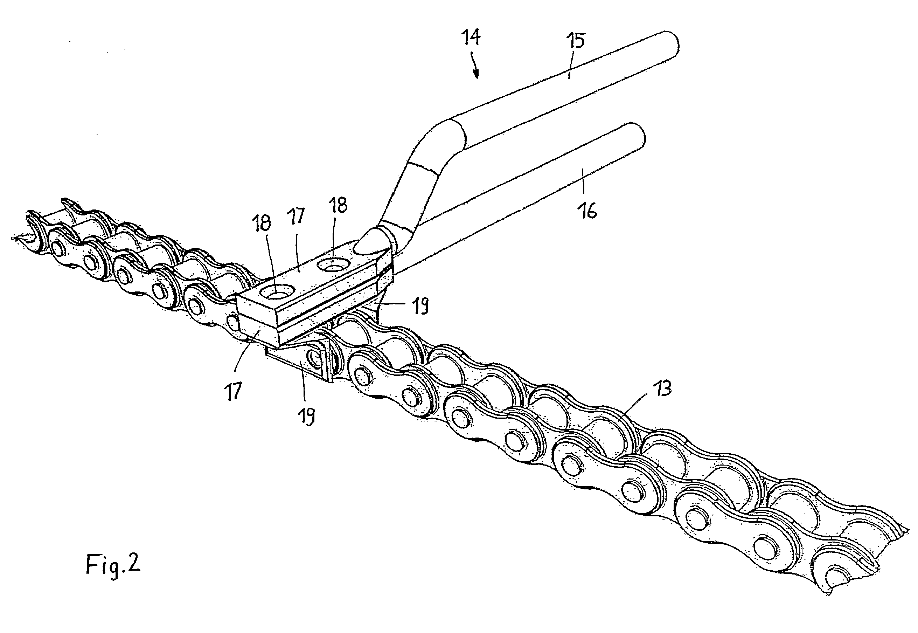

In dem in Fig. 2 gezeigten Ausführungsbeispiel ist das Zugmittel 13 eine Rollenkette. Als Zugmittel 13 kann auch ein Nockenriemen zum Einsatz kommen, der aus einem mit zugfesten Einlagen verstärkten Polymer besteht. Dies hat den Vorteil, dass ein Längen des Zugmittels 13 durch Verschleiß und damit ein Schleifen der Mitnehmerleisten 14 an den Kanalwänden vermieden wird.

Wie schon oben erwähnt, sind die mindestens zwei parallel zueinander verlaufenden Zugmittel 13 in regelmäßigen Abständen durch Mitnehmerleisten 14 miteinander verbunden. In Fig. 2 ist nur eine Seite des Schrägförderers 3 dargestellt. Die andere Seite ist spiegelbildlich aufgebaut, so dass die nachfolgenden Ausführungen auch für diese Seite gelten.

In dem Ausführungsbeispiel gemäß Fig. 2 bestehen die Mitnehmerleisten 14 aus zwei Stäben 15, 16 mit rundem Querschnitt. An ihren Enden sind die Stäbe 15, 16 jeweils mit einer Abflachung 17 versehen, die der Befestigung der Stäbe 15, 16 an dem Zugmittel 13 dienen. Dazu sind die Abflachungen 17 mit zwei voneinander beabstandeten Durchgangslöchern 18 versehen. Zum Befestigen der Stäbe 15, 16 an dem Zugmittel 13 werden die Abflachungen 17 so aufeinandergelegt, dass ihre Durchgangslöcher 18 miteinander fluchten. An den Befestigungsstellen liegen die Abflachungen 17 auf an dem Zugmittel 13 befestigten Flanschblechen 19 auf, die jeweils mit einem aus der Zeichnung nicht ersichtlichen Durchgangsloch verstehen sind, deren Abstand voneinander dem der Durchgangslöcher 18 der Abflachungen 17 entspricht. Zur Befestigung der Stäbe 15, 16 an dem Zugmittel 13 werden in der Zeichnung nicht dargestellte Niete durch die fluchtenden Durchgangslöcher 18 der Abflachungen 17 und der Flanschbleche 19 hindurch gesteckt und vernietet. Anstelle einer Nietverbindung kann natürlich auch eine Schraubverbindung Anwendung finden.

In dem in Fig. 2 gezeigten Beispiel besitzen die Stäbe 15, 16 eine gemeinsame Befestigungsstelle mit dem Zugmittel 13. Sie können davon abweichend auch nebeneinander angeordnete Befestigungsstellen an dem Zugmittel 13 haben, was in den Zeichnungen nicht dargestellt ist.

In dem Ausführungsbeispiel gemäß Fig. 2 ist der Stab 16 gerade ausgeführt, während der Stab 15 der Mitnehmerleiste 14 in den Erntegutstrom abgekröpft ist.

Um die Mitnehmerleisten 14 noch leichter zu gestalten, können die Stäbe 15, 16 auch als Hohlstäbe ausgeführt sein.

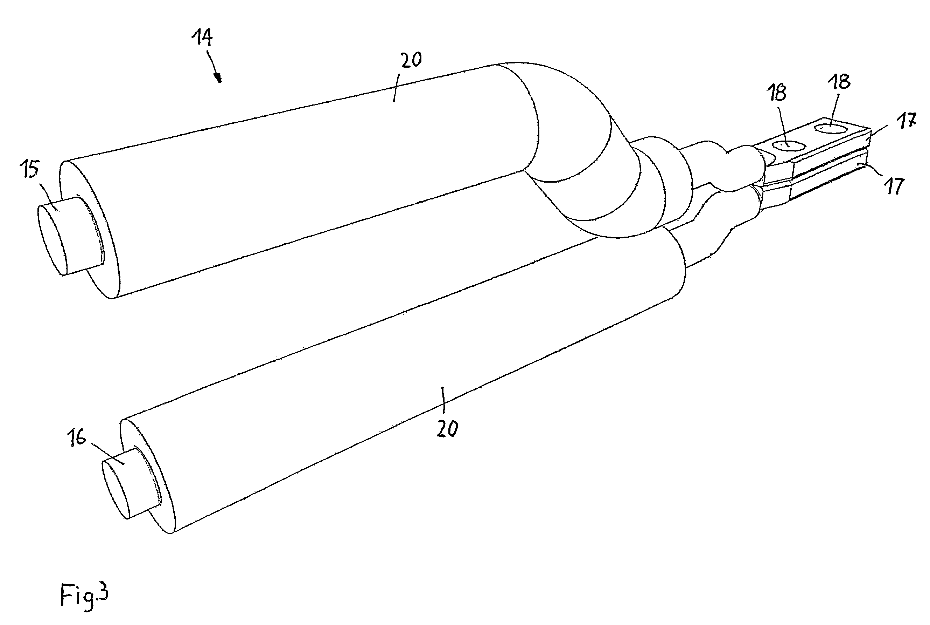

In Fig. 3 ist eine weitere Ausführungsform einer Mitnehmerleiste 14 dargestellt. Diese unterscheidet sich von der Ausführungsform gemäß Fig. 2 lediglich dadurch, dass die Stäbe 15, 16 jeweils mit einer konzentrisch angeordneten Ummantelung 20 versehen sind, die aus einem Material mit einem hohen Reibungsbeiwert, z. B. Gummi, besteht. Durch diese Ummantelung 20 wird der Reibschluss der Mitnehmerleisten 14 mit dem Erntegut und damit der Mitnahmeeffekt verbessert.

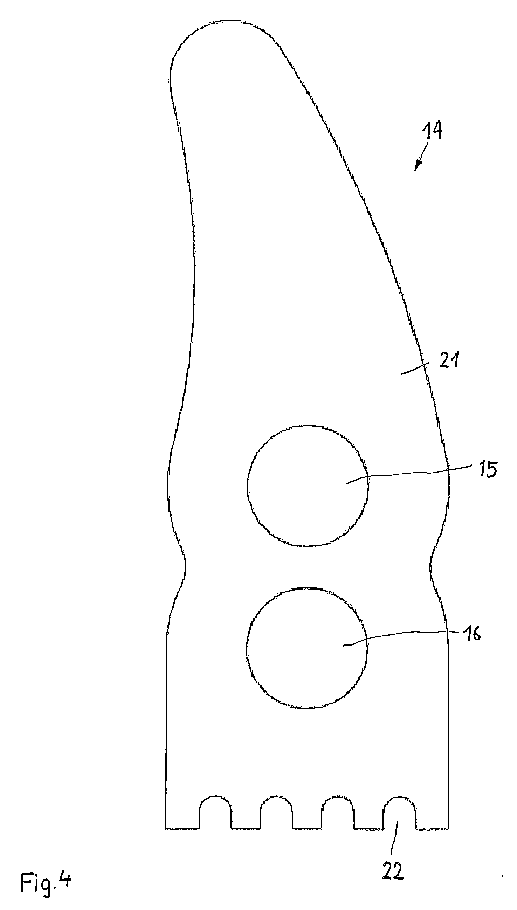

Fig. 4 zeigt einen Schnitt durch eine Mitnehmerleiste 14, bei der die Stäbe 15, 16 eine gemeinsame Ummantelung 21 besitzen, die die Form eines etwa senkrecht zu der Förderebene stehenden Flügels hat. Die Ummantelung 21 besteht ebenfalls wieder aus einem friktionserhöhenden Material, z. B. Gummi. Um die Mitnahmewirkung dieser Mitnehmerleisten 14 noch zu erhöhen, ist deren der Bodenwand 9.2 des Förderkanals 9 zugewandte Stirnfläche mit Längsrillen 22 versehen.

In den oben beschriebenen Ausführungsbeispielen sind die Stäbe 15, 16 aus einem kalt gezogenem Federstahldraht oder warm gewalztem und vergütetem Draht mit einer Streckgrenze größer 1000 N/mm² hergestellt. Die Stäbe 15, 16 haben eine Länge von ca. 500 mm und einen Durchmesser von ca.15mm. Die Stäbe 15, 16 können auch ganz oder teilweise aus einem Faserverbundwerkstoff hergestellt sein.

## Patentansprüche

1. Schrägförderer für Mähdrescher, mit mindestens zwei parallel zueinander verlaufenden, endlosen Zugmitteln (13), die durch quer zur Förderrichtung angeordnete Mitnehmerleisten (14) miteinander verbunden sind, **dadurch gekennzeichnet, dass** die Mitnehmerleisten (14) mindestens zwei übereinander angeordnete Stäbe (15, 16) mit rundem Querschnitt aufweisen, die als Einzelstäbe an den Zugmitteln (13) befestigt sind.

2. Schrägförderer nach Anspruch 1, **dadurch gekennzeichnet, dass** die Stäbe (15, 16) einer Mitnehmerleiste (14) eine gemeinsame Befestigungsstelle an den Zugmitteln (13) haben.

3. Schrägförderer nach Anspruch 1, **dadurch gekennzeichnet, dass** die Stäbe (15, 16) einer Mitnehmerleiste (14) nebeneinander angeordnete Befestigungsstellen an den Zugmitteln (13) haben.

4. Schrägförderer nach einem der vorstehenden Ansprüche, **dadurch gekennzeichnet, dass** die Stäbe (15, 16) mit einer friktionserhöhenden Ummantelung (20, 21) versehen sind.

5. Schrägförderer nach Anspruch 4, **dadurch gekennzeichnet, dass** die Ummantelung (20) konzentrisch zu den Stäben (15, 16) angeordnet ist.

6. Schrägförderer nach Anspruch 4, **dadurch gekennzeichnet, dass** die mindestens zwei Stäbe (15, 16) eine gemeinsame Ummantelung (21) in Form eines etwa senkrecht zu der Förderebene stehenden Flügels haben.

7. Schrägförderer nach einem der vorstehenden Ansprüche, **dadurch gekennzeichnet, dass** die Stäbe (15, 16) aus kaltgezogenem oder warmgewalztem und vergütetem Draht hergestellt sind.

8. Schrägförderer nach einem der vorstehenden Ansprüche 1 bis 6, **dadurch gekennzeichnet, dass** die Stäbe (15, 16) hohl sind.

9. Schrägförderer nach einem der vorstehenden Ansprüche 1 bis 6 und 8, **dadurch gekennzeichnet, dass** die Stäbe (15, 16) ganz oder teilweise aus einem Faserverbundwerkstoff hergestellt sind.

10. Schrägförderer nach einem der vorstehenden Ansprüche, **dadurch gekennzeichnet, dass** das Zugmittel (13) ein Riemen aus einem mit zugfesten Einlagen verstärktem Polymer ist.

## Claims

1. Inclined conveyor for a combine harvester, having at least two endless traction means (13) which run parallel to one another and are connected to one another by entraining strips (14) which are arranged transversely to the direction of conveyance,
**characterised in that**
the entraining strips (14) have at least two bars (15, 16) with a round cross-section, which are arranged one above another and are fastened to the traction means (13) as individual bars.

2. Inclined conveyor according to Claim 1,
**characterised in that**
the bars (15, 16) of an entraining strip (14) have a common fastening point on the traction means (13).

3. Inclined conveyor according to Claim 1,
**characterised in that**
the bars (15, 16) of an entraining strip (14) have fastening points which are arranged side by side on the traction means (13).

4. Inclined conveyor according to one of the preceding claims,
**characterised in that**
the bars (15, 16) are provided with a frictionincreasing sheath (20, 21).

5. Inclined conveyor according to Claim 4,
**characterised in that**
the sheath (20) is arranged concentrically with the bars (15, 16).

6. Inclined conveyor according to Claim 4,
**characterised in that**
the at least two bars (15, 16) have a common sheath (21) in the form of a vane which extends approximately perpendicularly to the conveying plane.

7. Inclined conveyor according to one of the preceding claims,
**characterised in that**
the bars (15, 16) are manufactured from cold-drawn or hot-rolled and heat-treated wire.

8. Inclined conveyor according to one of the preceding Claims 1 to 6,
**characterised in that**
the bars (15, 16) are hollow.

9. Inclined conveyor according to one of the preceding Claims 1 to 6 and 8,
**characterised in that**
the bars (15, 16) are manufactured wholly or partly from a fibre composite material.

10. Inclined conveyor according to one of the preceding claims,
**characterised in that**
the traction means (13) is a belt made of a polymer reinforced with tension-proof inlays.

## Revendications

1. Convoyeur incliné pour moissonneuses-batteuses avec au moins deux moyens de traction sans fin (13) qui s'étendent parallèlement l'un à l'autre et sont reliés par des barres d'entraînement (14) disposées transversalement au sens de convoyage, **caractérisé en ce que** les barres d'entraînement (14) présentent au moins deux tiges (15, 16) de section transversale ronde, qui sont disposées l'une au-dessus de l'autre et fixées comme tiges individuelles sur les moyens de traction (13).

2. Convoyeur incliné suivant la revendication 1, **caractérisé en ce que** les tiges (15, 16) d'une barre d'entraînement (14) présentent un emplacement de fixation commun sur les moyens de traction (13).

3. Convoyeur incliné suivant la revendication 1, **caractérisé en ce que** les tiges (15, 16) d'une barre d'entraînement (14) présentent des emplacements de fixation disposés, les uns à côté des autres, sur les moyens de traction (13).

4. Convoyeur incliné suivant une des revendications précédentes, **caractérisé en ce que** les tiges (15, 16) sont pourvues d'une gaine (20, 21) augmentant la friction.

5. Convoyeur incliné suivant la revendication 4, **caractérisé en ce que** la gaine (20) est disposé de façon concentrique par rapport aux tiges (15, 16).

6. Convoyeur suivant la revendication 4, **caractérisé en ce que** les au moins deux tiges (15, 16) présentent une gaine (21) commune ayant la forme d'une ailette à peu près perpendiculaire au plan de convoyage.

7. Convoyeur incliné suivant une des revendications précédentes, **caractérisé en ce que** les tiges (15, 16) sont fabriquées en fil tréfilé à froid ou laminé à chaud et trempé et revenu.

8. Convoyeur incliné suivant une des revendications précédentes 1 à 6, **caractérisé en ce que** les tiges (15, 16) sont creuses.

9. Convoyeur suivant une quelconque des revendications précédentes 1 à 6 et 8, **caractérisé en ce que** les tiges (15, 16) sont fabriquées entièrement ou partiellement en un matériau composite renforcé aux fibres.

10. Convoyeur incliné suivant une quelconque des revendications précédentes, **caractérisé en ce que** le moyen de traction (13) est une courroie en un polymère renforcé par des inserts résistants à la traction.
